# EUROPEAN PATENT APPLICATION

(11) **EP 1 640 354 A2**
(43) Date of publication of application: **29.03.2006**
(21) Application number: 05017489.5
(22) Date of filing: 31.08.2005
(51) Int. Cl.: C06C 9/00, B60R 21/26, C06B 33/00

(54) **Igniting agent, initiator, gas generator, airbag apparatus, and seatbelt apparatus**

(30) Priority: 24.09.2004 JP 2004277488; 03.06.2005 JP 2005164226
(71) Applicant: TAKATA CORPORATION, Minato-ku, Tokyo 106-8510 (JP)
(72) Inventor: Furusawa, Takashi, Tokyo, 106-8510 (JP); Suzuki, Kuniteru, Yokohama-shi Kanagawa (JP); Amano, Junya, Tokyo, 106-8510 (JP); Sanoki, Hiroyuki, Tokyo, 106-8510 (JP); Yamashitaya, Suguru, Tokyo, 106-8510 (JP)
(74) Representative: Vossius & Partner

(57) **Abstract**

It is an object of the invention to provide an igniting agent containing a powder of a Mg-Al alloy having a high ignition speed and good grindability, an initiator containing the igniting agent, a gas generator incorporating the initiator, and an airbag apparatus and seatbelt apparatus incorporating the gas generator.

According to the invention, an igniting agent includes a powder of a Mg·Al alloy containing Mg: 55 to 70 wt% and Al: the balance. At least one selected from the group consisting of Ca, Mn, Li, Si, Sb, Sr, Zn, Zr, Sc, Y, Sn, Ba, and rare earth metals may be added in an amount of 0.5 to 10 wt%. An initiator is loaded with the igniting agent. A gas generator incorporates the initiator.

## Description

The present invention relates to an igniting agent, an initiator incorporating the igniting agent, and a gas generator incorporating the initiator. The gas generator is, for example, incorporated in an airbag apparatus or a seatbelt apparatus of an automobile or the like.

An airbag apparatus installed in a rapidly moving vehicle, such as an automobile, is arranged such that a pouch-shaped airbag is rapidly inflated with a gas generator called an inflator. The gas generator includes a gas generating agent and an initiator for inducing a gas generation reaction of the gas-generating agent. The initiator includes a reactive substance and a filament (bridge wire) serving as a resistive heating element for initiating the reaction of the reactive substance (e.g., US-A-5404263).

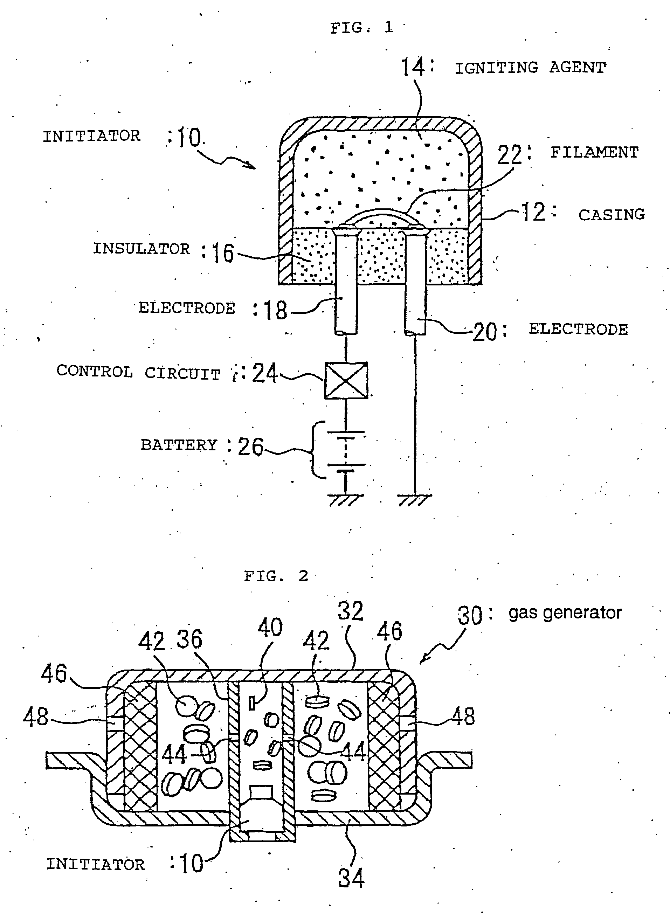

An example of an initiator of related art is described with reference to Fig. 1.

An initiator 10 includes a substantially cup-shaped casing 12 having an opening on the rear side (downward in Fig. 1). An igniting agent 14 is accommodated in the casing 12. The rear portion of the casing 12 is closed with an insulator 16 composed of sintered glass or the like. In the casing 12, front ends of a pair of electrode 18 and 20 penetrating the insulator 16 are inserted.

A filament 22 is stretched across the front ends of the electrodes 18 and 20. The two ends of the filament 22 are welded to the front-end surfaces of the electrodes 18 and 20. The filament 22 is inside the casing 12 and in contact with the igniting agent 14.

The electrodes 18 and 20 and the casing 12 are isolated from one another so as not to make electrical contact with one another.

In the initiator 10 having such a configuration, the electrode 18 is connected to a positive electrode of a battery 26 of an automobile via a control circuit 24 having a booster circuit and the like, and the electrode 20 is connected (earthed) to the body of the automobile. The negative electrode of the battery 26 is connected to the body of the automobile.

In case of emergency, such as automobile collision, the switching element in the control circuit 24 is turned ON, and a voltage is applied to the filament 22 from the battery 26 via the electrodes 18 and 20. As a result, the filament 22 generates heat to ignite the igniting agent 14, thereby initiating the reaction. As a result of the reaction of the igniting agent 14, high-pressure gas and heat are generated to induce a gas generation reaction of the gas generating substance of the gas generator.

An example of the gas generator having the initiator 10 is described with reference to Fig. 2. A gas generator 30 has a container that includes an outer shell constituted from an upper housing 32 and a lower housing 34 and a cylindrical divider 36 disposed inside the outer shell. One end of the cylindrical divider 36 passes through an opening formed in the bottom face of the lower housing 34 and protrudes downward. The inner peripheral face of this opening is welded onto the outer peripheral face of the cylindrical divider 36 using a laser beam or the like. Inside the cylindrical divider 36, an igniting agent (booster propellant) 40 is accommodated, and a gas-generating agent (main propellant) 42 is accommodated outside the cylindrical divider 36.

The initiator 10 is disposed in one end of the cylindrical divider 36. When the igniting agent 40 is ignited by the initiator 10, gas blows out from an opening 44 of the cylindrical divider 36, thereby igniting a gas-generating agent 42. A large amount of gas is rapidly generated, passes through a filter 46 composed of a mesh or the like, blows out from the gas generator 30 via an opening 48, and inflates the airbag. Note that Fig. 2 illustrates one example of the gas generator. Various types of gas generators other than one illustrated in the drawing have been commonly used.

Japanese Translation JP 2003-527276 A of PCT application, Publication No. WO 00/46170 discloses an igniting agent prepared by blending strontium nitrate and a Mg·Al alloy powder containing 10 to 50 wt% of Mg and 50 to 90 wt% of Al.

It has been found that the Mg·Al alloy powder contained in the igniting agent set forth in the above-described JP 2003-527276 A has a low Mg content, and the speed of the ignition thereof is low.

An object of the present invention is to provide an igniting agent containing a Mg·Al alloy powder having high speed of ignition and good grindability, an initiator containing the igniting agent, a gas generator incorporating the initiator, an airbag apparatus incorporating the gas generator, and a seatbelt apparatus incorporating the gas generator.

According to the present invention (claim 1), the igniting agent contains a Mg·Al alloy as a fuel constituent, the Mg·Al alloy containing 55 to 70 wt% of Mg and the balance of Al.

An igniting agent of claim 2 contains a powder of a Mg·Al-based alloy having the following composition as a fuel constituent:
at least one selected from the group consisting of Ca, Mn, Li, Si, Sb, Sr, Zn, Zr, Sc, Y, Sn, Ba, and rare earth metals: 0.5 to 10 wt% and
the balance of Mg and Al.

An igniting agent of claim 3 is the igniting agent according to claim 2 in which the ratio Mg/(Mg + Al) is 0.55 to 0.70.

An igniting agent of claim 4 contains a powder of the Mg·Al alloy according to claim 1 and a powder of the Mg·Al-based alloy according to claim 2 or 3 as fuel constituents.

An igniting agent of claim 5 is the igniting agent according to any one of claims 1 to 4, in which 50 to 90 parts by weight of an oxidant is added for 10 to 50 parts by weight of the powder (100 parts by weight in total).

An igniting agent of claim 6 is the igniting agent according to claim 5, in which the oxidant is at least one selected from the group consisting of KClO₄, KClO₃, KIO₄, KIO₃, KMnO₄, K₂Cr₂O₇, NH₄ClO₄, NH₄NO₃, and Sr(NO₃)₂.

An igniting agent of claim 7 is the igniting agent according to any one of claims 1 to 6, further containing a resin binder.

An initiator of claim 8 includes the igniting agent according to any one of claims 1 to 7.

A gas generator of claim 9 includes the initiator according to claim 8.

An airbag apparatus of claim 10 includes the gas generator according to claim 9.

A seatbelt apparatus of claim 11 includes a seatbelt and a pretensioner for applying a pretension to the seatbelt by a gas pressure from a gas generator in case of emergency, wherein the gas generator is the gas generator according to claim 9.

The present inventor has conducted various investigations and found that by increasing the Mg content in the Mg·Al alloy to a level higher than that described in JP 2003-527276 A, the ignition performance of the Mg·Al alloy powder can be enhanced. The present invention is made based on this finding. It should be noted that by adjusting the Mg content in the Mg·Al alloy to 70% or less, the grindability of the Mg·Al alloy can be enhanced. Moreover, this contributes to reducing the danger in handling and increasing the corrosion resistance.

By adding at least one of Ca, Mn, Li, Si, Sb, Sr, Zn, Zr, Sc, Y, Sn, Ba, and rare earth metals to the Mg·Al alloy, the ignition performance can be further improved, and the grindability of the Mg·Al alloy can be further improved.

By blending a resin binder, such as silicon resin binder, to the igniting agent, the handling of the igniting agent can be facilitated.

The igniting agent of the present invention contains Mg·Al alloy powder and/or the Mg·Al-based alloy powder.

The composition of the Mg·Al alloy powder is 55 to 70 wt% Mg and 30 to 45 wt% Al, and more preferably 57 to 63 wt% Mg and 37 to 43 wt% Al. By adjusting the Mg content to 55 wt% or more, the time taken for ignition of the igniting agent can be shortened. Moreover, by adjusting the Mg content to 70 wt% or less, the Mg·Al alloy becomes easily grindable, and the cost for manufacturing the igniting agent can be reduced.

The Mg·Al-based alloy powder containing at least one metal (hereinafter, this metal is sometimes referred to as "additive metal") selected from the group consisting of Ca, Mn, Li, Si, Sb, Sr, Zn, Zr, Sc, Y, Sn, Ba, and rare earth metals, and the Mg·Al alloy will achieve similar effects and advantages. By incorporating the additive metal, the time taken for the ignition of the igniting agent can be shortened and stabilized. Moreover, the ignition performance at high temperature can be improved. Incorporation of the additive metal also enhances the grindability of the alloy.

The additive metal is preferably added in an amount of 0.5 to 10 wt% relative to the Mg·Al-based alloy. In adding the additive metal, the ratio (Mg/(Mg + Al)) between Mg and Al in the balance excluding the additive metal is preferably 0.55 to 0.80 and more preferably 0.57 to 0.63.

Among the additive metals listed above, Ca is particularly preferable.

Each alloy described above is finely ground in a non-oxidative atmosphere such as nitrogen or argon using, e.g., a ball mill. The average particle diameter of the powder is preferably 10 µm or less. Since an average particle diameter less than 1 µm induces spontaneous combustion during handling, the average particle diameter is preferably 1 to 10 µm and more preferably 5 to 9 µm.

In the present invention, the oxidant is added in an amount of 90 to 50 parts by weight relative to 10 to 50 parts by weight of the alloy powder, the total being 100 parts by weight.

The grinding of the oxidant may also be performed in a ball mill.

The oxidant is preferably a peroxide and/or a nitrate. As the peroxide and/or a nitrate, at least one selected from the group consisting of KClO₄, KClO₃, KIO₄, KIO₃, KMnO₄, K₂Cr₂O₇, NH₄ClO₄, NH₄NO₃, and Sr(NO₃)₂ is preferable. Of these, KClO₃ and the like are particularly preferable.

The igniting agent of the present invention may be composed of only the igniting component described above or may additionally contain a resin binder such as a silicon resin or the like to facilitate handling. The content of the resin binder is preferably 0.5 to 15 parts by weight and more preferably about 0.5 to 10 parts by weight per 100 parts by weight of the igniting component described above.

### Brief Description of the Drawings

Fig. 1 A cross-sectional view showing an example of an initiator.
Fig. 2 A cross-sectional view showing an example of a gas generator.
Fig. 3 A vertical cross-sectional view of an airbag apparatus equipped with the gas generator shown in Fig. 2.
Fig. 4 An overall view of a seatbelt apparatus equipped with a gas generator.
Fig. 5 An exploded perspective view of a retractor of the seatbelt apparatus shown in Fig. 4.

The igniting agent is, for example, loaded inside the initiator, as shown in Fig. 1. The initiator is, for example, incorporated in the gas generator, as shown in Fig. 2. However, the structures of the initiator and the gas generator are not particularly limited, and various structures other than ones illustrated in the drawings are applicable.

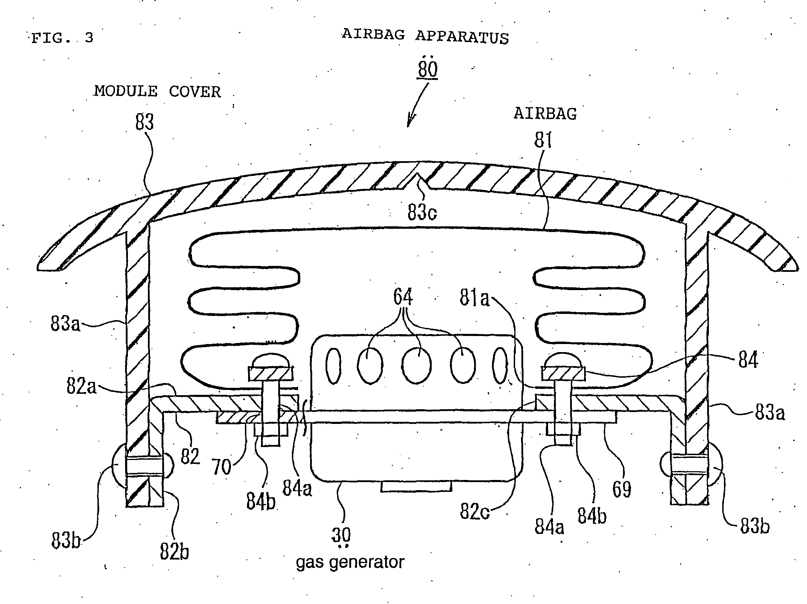

Next, a gas generator equipped with the initiator 10 shown in Fig. 1 and examples of the airbag apparatus and seatbelt apparatus equipped with the gas generator will be described with reference to Figs. 3 to 5.

Fig. 3 is a vertical cross-sectional view of an airbag apparatus equipped with the gas generator shown in Fig. 2.

An airbag apparatus 80 includes the gas generator 30 shown in Fig. 2, an airbag 81 inflatable by gas from the gas generator 30, a retainer 82 for retaining the gas generator 30 and the airbag 81, and a module cover 83 attached to the retainer 82 so as to cover the folded airbag 81.

The airbag 81 has a front face that opposes an occupant of a vehicle when inflated and a rear face opposite to the front face. In the rear face, an opening (inlet) 81a through which the gas generator 30 is inserted is disposed.

The retainer 82 is constituted from a main segment 82a and a leg segment 82b bent downward from the periphery of the main segment 82a. A gas generator insertion port 82c is formed at the center of the main segment 82a. As shown in Fig. 3, the front end of the gas generator 30 is inserted to the gas generator insertion port 82c from the rear side of the main segment 82a. The periphery of the gas generator insertion port 82c is aligned with the opening (inlet) 81a of the airbag 81, and the airbag 81 is fixed with a mounting ring 84. The front end of the gas generator 30 is inside the airbag 81 through the opening 81a.

Bolts (stud bolts) 84a project from the mounting ring 84, and the respective bolts 84a are inserted to the corresponding insertion holes (reference numerals are not given) around the opening 81a and the gas generator insertion port 82c, and holes 70 formed in a flange 69. The bolts 84a thereby protrude from the rear side of the flange 69, and nuts 84b and the bolts 84a are tightened so as to fix the airbag 81 and the gas generator 30 onto the retainer 82.

The airbag 81 is folded, and the module cover 83 is attached to cover the airbag 81 so as to obtain the airbag apparatus 80.

Note that in this embodiment, a leg segment 83a extends downward from the rear face of the module cover 83, and the leg segment 83a is fixed onto the leg segment 82b of the retainer 82 with a cramp 83b such as a rivet. The module cover 83 breaks open as it is pushed by the inflated airbag. Reference numeral 83c denotes a tear line for promoting the breaking.

According to the gas generator 30 and the airbag apparatus 80 having such structures, the igniting agent 14 inside the initiator 10 is reacted once the electrodes 18 and 20 of the initiator 10 are energized, and the igniting agent 40 is ignited thereby. Subsequently, the gas-generating agent 42 is ignited by hot gas from the igniting agent 40 through the opening 44, thereby producing gas. The gas passes through the filter 46 and the opening 48 and jets out toward the interior of the airbag 81. The airbag 81 is inflated as a result. The airbag 81 pushes the module cover 83 open so that the airbag 81 is expanded to oppose the occupant or the like, and thereby protects the occupant.

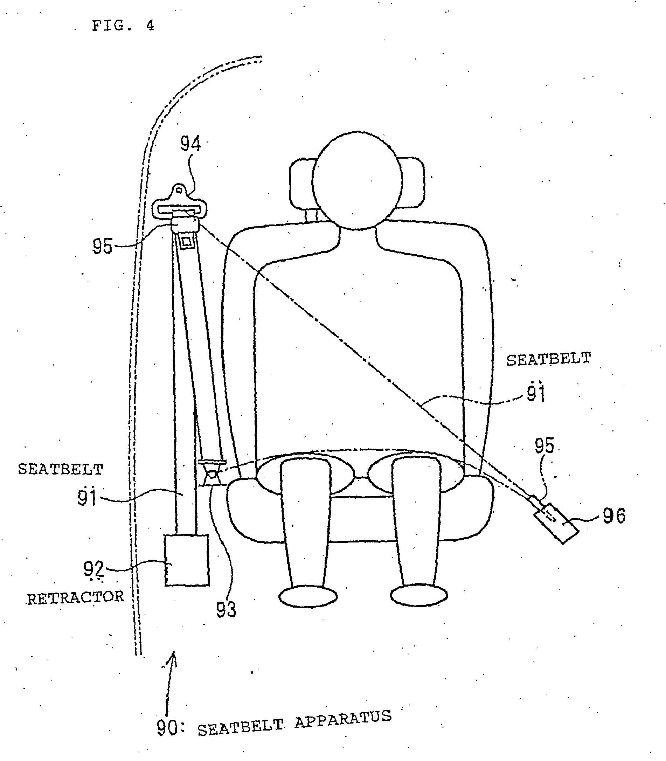

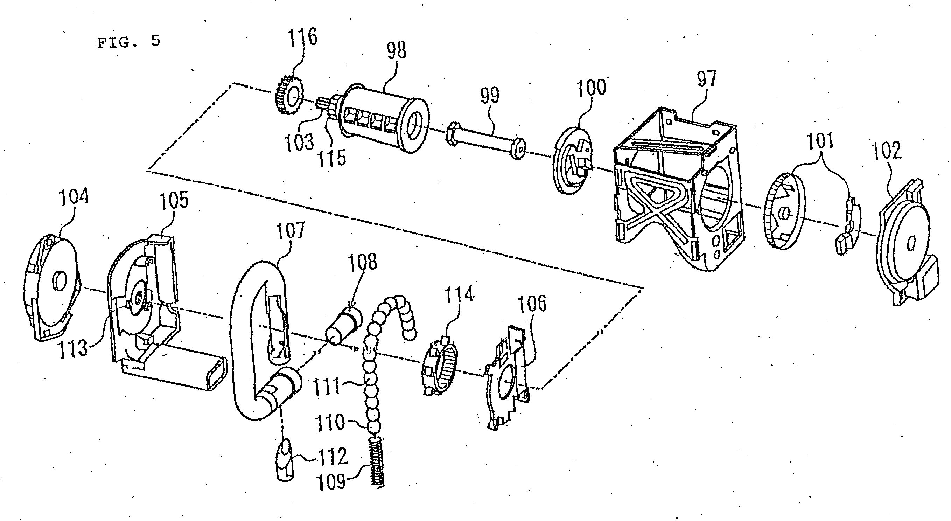

Fig. 4 is an overall view of a seatbelt apparatus equipped with the gas generator. Fig. 5 is an exploded perspective view of a retractor (pretensioner) of this seatbelt apparatus.

A seatbelt 91 of a seatbelt apparatus 90 has one end connected to a retractor 92 so that the seatbelt 91 is retractable and the other end fixed onto the vehicle body with an anchor 93. The middle portion of the seatbelt 91 is passed through a shoulder anchor 94 and a tongue 95. The anchor 93 is at the side of the vehicle cabin. On the side of the seat opposite to the anchor 93, a buckle unit 96 with which the tongue 95 is latched is disposed. The shoulder anchor 94 is disposed in the upper part of the side of the vehicle cabin.

In this embodiment, the retractor 92 includes a pretensioner that applies pretension to the seatbelt 91 in the event of vehicle emergency, and an energy-absorbing mechanism (EA mechanism) for absorbing impact applied from the seatbelt 91 to the occupant. The structure of the retractor 92 is described below with reference to Fig. 5.

A spool 98 is accommodated in a base frame 97 of the retractor 92, and one end of the seatbelt 91 is wound around the spool 98. The seatbelt 91 is withdrawn and retracted by the rotation of the spool 98. A torsion bar 99 is disposed at the center of axle of the spool 98, and one end of the torsion bar 99 is supported by a support member 102 via lock mechanism components 100 and 101.

The torsion bar 99 is the main component of the EA mechanism. When the tension of the seatbelt 91 exceeds a predetermined value, the torsion bar 99 undergoes plastic torsional deformation, and the spool 98 rotates in a withdrawal direction of the seatbelt 91 while receiving drag.

A gear 103 is mounted onto one end (left end in Fig. 5) of the spool 98. The gear 103 engages with a gear (not shown) in a return spring cover 104 shown on the left of the bottom row in Fig. 5. The spool 98 is urged in a direction of retracting the seatbelt 91 by a return spring (not shown) inside the return spring cover 104.

In Fig. 5, a pipe 107 is disposed between a pretensioner cover 105 illustrated immediate right of the return spring cover 104 and a pretensioner plate 106 illustrated at the right end of the bottom row. A gas generator 108 is disposed at one end of the pipe 107. A spring 109, a piston 110, and a plurality of balls 111 are arranged inside the pipe 107. In the side face near the other end of the pipe 107, a cutout opening (reference numerals is not given) is formed. A guide block 112 is fitted at the other end of the pipe 107.

The pretensioner cover 105 has a pin 113, and holds a ring gear 114 having external and internal gear tooth relative to the pin 113. The pipe 107 is disposed so that it extends around the outer periphery of the ring gear 114. The pipe 107 is disposed such that the direction from one end toward the other end is coincident with the direction of rotation of the spool 98 retracting the sheet belt. The opening is arranged to face the outer peripheral face of the ring gear 114, and the forefront ball 111 exposed at the opening engages with the external tooth of the ring gear 114.

A pinion 116 engageable with the inner tooth of the ring gear 114 is disposed at a base 115 of the gear 103. When the ring gear 114 is held with the pin 113, the ring gear 114 does not engage with the pinion 116.

When gas is blown out from the gas generator 108, the gas is introduced to the pipe 107. The gas pressure moves the balls 111 toward the other end of the pipe 107, i.e., in a direction of rotation of the spool 98 retracting the sheet belt. Meanwhile, the forefront ball 111 presses the ring gear 114, thereby breaking the pin 113 and releasing the retention of the ring gear 114 with the pin 113. The ring gear 114 thereby engages with the pinion 116.

Consequently, the spool 98 is urged in a direction of rotation for retracting the sheet belt via the pinion 116, the ring gear 114, and the balls 111 by a gas pressure from the gas generator 108. The seatbelt 91 is thereby retracted by the spool 98, and a pretension is applied to the seatbelt 91.

In this embodiment, the gas generator 108 has a substantially cylindrical housing, and the gas generator and the initiator 10 shown in Fig. 1 are accommodated in the housing.

With the gas generator 108 and the seatbelt apparatus 90 having the above-described structures, once the initiator 10 is energized, the igniting agent 14 is reacted, and the gas-generating agent is ignited to generate gas. Due to the pressure of the gas, gas is blown out from the gas generator 108 into the pipe 107. As a result, the pretensioner mechanism of the retractor 92 operates as described above to apply a pretension to the seatbelt 91.

The respective embodiments described above are examples of the present invention, and embodiments other than those illustrated in the drawings are also possible. For example, the initiator may be incorporated in a various gas generator other than one described above. The gas generator may be incorporated in an airbag apparatus or a seatbelt apparatus other than those described above.

Examples and Comparative Examples will now be described.

Examples 1 to 3 and Comparative Examples 1 to 4
Metals, i.e., Mg and Al, and, if required, Ca were mixed at a ratio shown in Table 1 to prepare sample mixtures. Each mixture was processed into an ingot at 700°C, and the resulting ingot is ground in a ball mill to prepare powder having an average particle diameter of about 7 µm. The ignition performance of the powder was determined as follows.

Four grams of MgAl powder, KClO₃ (average particle diameter: 3 µm), 100 mg of a silicon resin binder, and 5 ml of ethanol were mixed, and the mixture was dried to prepare an igniting agent. The igniting agent was weighed in a metal cup, and a header onto which a NiCr bridge wire (diameter: 22 µm) was welded was press-fitted into the metal cup at a constant pressure (1,500 N) to assemble a sample. A constant current of 1.2 A × 2 ms was applied to the sample, and the light at the ignition was detected with an optical sensor. The time taken for ignition was determined and used in evaluating the ignition performance.

The results are shown in Table 1. In the table, the time taken to grind the ingot to powder having an average particle diameter of 7 µm is also shown.

Examples 4 to 6 and Comparative Example 5
The ratio Mg/(Mg + Al) was fixed to 0.6, and the same performance evaluation was conducted by varying the ratio of Ca added. The results are shown in Table 1.

| No. | Composition (wt%) | | | Average ignition time (ms) | Grinding time (Hr) |
|---|---|---|---|---|---|
| | Mg | Al | Ca | | |
| Comparative Example 1 | 40 | 60 | 0 | 1.52 | 47 |
| Comparative Example 2 | 50 | 50 | 0 | 1.35 | 40 |
| Example 1 | 58 | 42 | 0 | 1.07 | 45 |
| Example 2 | 63 | 37 | 0 | 1.06 | 49 |
| Comparative Example 3 | 70 | 30 | 0 | 1.05 | 78 |
| Comparative Example 4 | 75 | 25 | 0 | 1.03 | >120 |
| Example 3 | 58 | 39 | 3 | 0.95 | 38 |
| Example 4 | 60 | 40 | 0 | 1.06 | 48 |
| Example 5 | 59 | 40 | 1 | 0.98 | 38 |
| Example 6 | 55 | 37 | 8 | 0.97 | 38 |
| Comparative Example 5 | 51 | 34 | 15 | 1.15 | 64 |

As is shown in Table 1, Examples 1 to 3 showed higher ignition performance than that of Comparative Examples 1 and 2 having lower Mg contents. Examples 1 to 3 also showed good grindability. Comparative Examples 3 and 4 contain excessive Mg; thus, although the ignition performance is high, the grindability is lower than that of Examples 1 to 3.

As is apparent from the comparison between Examples 4 to 6 and Comparative Example 5, addition of Ca reduces the average time taken for ignition but at a Ca content exceeding 10%, Ca does not homogeneously dissolve in the alloy, thereby resulting in variation in time taken for ignition and the increased average time taken for ignition.

Examples 7 to 17
An igniting agent was prepared as in Example 3 but with a metal shown in Table 2 instead of Ca, and the performance of the igniting agent was evaluated. The results are show in Table 2.

**[Table 2]**

| No. | Composition (wt%) | | | Average ignition time (ms) | Grinding time (Hr) |
|---|---|---|---|---|---|
| | Mg | Al | Additive metal | | |
| Example 7 | 58 | 39 | 3 (Mn) | 1.01 | 38 |
| Example 8 | 58 | 39 | 3 (Li) | 1.00 | 38 |
| Example 9 | 58 | 39 | 3 (Si) | 1.02 | 40 |
| Example 10 | 58 | 39 | 3 (Sb) | 0.99 | 40 |
| Example 11 | 58 | 39 | 3 (Sr) | 1.01 | 40 |
| Example 12 | 58 | 39 | 3 (Zn) | 1.03 | 38 |
| Example 13 | 58 | 39 | 3 (Zr) | 0.98 | 42 |
| Example 14 | 58 | 39 | 3 (Sc) | 1.01 | 41 |
| Example 15 | 58 | 39 | 3 (Y) | 1.02 | 41 |
| Example 16 | 58 | 39 | 3 (Sn) | 1.01 | 42 |
| Example 17 | 58 | 39 | 3 (Ba) | 1.00 | 40 |

As show in Table 2, it was confirmed that the average time was similarly reduced by using the respective metals instead of Ca.

## Claims

1. An igniting agent comprising a powder of a Mg·Al alloy having the following composition as a fuel constituent:
Mg: 55 to 70 wt%; and
Al: the balance.

2. An igniting agent comprising a powder of a Mg·Al-based alloy having the following composition as a fuel constituent:
at least one selected from the group consisting of Ca, Mn, Li, Si, Sb, Sr, Zn, Zr, Sc, Y, Sn, Ba, and rare earth metals: 0.5 to 10 wt%; and
the balance: Mg and Al.

3. The igniting agent according to claim 2, wherein the ratio Mg/(Mg + Al) is 0.55 to 0.70.

4. An igniting agent comprising a powder of the Mg·Al alloy according to claim 1 and a powder of the Mg·Al-based alloy according to claim 2 or 3 as fuel constituents.

5. The igniting agent according to any one of claims 1 to 4, wherein 50 to 90 parts by weight of an oxidant is added for 10 to 50 parts by weight of the powder (100 parts by weight in total).

6. The igniting agent according to claim 5, wherein the oxidant is at least one selected from the group consisting of KClO₄, KClO₃, KIO₄, KIO₃, KMnO₄, K₂Cr₂O₇, NH₄ClO₄, NH₄NO₃, and Sr (NO₃)₂.

7. The igniting agent according to any one of claims 1 to 6, further comprising a resin binder.

8. An initiator comprising the igniting agent according to any one of claims 1 to 7.

9. A gas generator comprising the initiator according to claim 8.

10. An airbag apparatus comprising the gas generator according to claim 9.

11. A seatbelt apparatus comprising a seatbelt and a pretensioner for applying a pretension to the seatbelt by a gas pressure from a gas generator in case of emergency, wherein the gas generator is the gas generator according to claim 9.
